# EUROPEAN PATENT SPECIFICATION

(11) **EP 0 788 870 B1**
(45) Date of publication and mention of the grant of the patent: **11.07.2001**
(21) Application number: 97101795.9
(22) Date of filing: 05.02.1997
(51) Int. Cl.: B29C 59/12

(54) **Process for surface treatment of vulcanized rubber and process for production of rubber-based composite material**
Verfahren zur Oberflächenbehandlung von vulkanisiertem Gummi und Verfahren zur Herstellung von Verbundmaterialien auf Gummibasis
Procédé pour le traitement de surface de caoutchouc vulcanisé et procédé pour la fabrication de matière composite à base de caoutchouc

(30) Priority: 08.02.1996 JP 4666196
(43) Date of publication of application: 13.08.1997
(73) Proprietor: Bridgestone Corporation, Tokyo (JP); Koinuma, Hideomi, Tokyo (JP)
(72) Inventor: Koinuma, Hideomi, Suginami-ku, Tokyo (JP); Kusano, Yukihiro, Kokubunji-shi, Tokyo (JP); Yoshikawa, Masato, Kodaira-shi, Tokyo (JP); Kato, Nobuko, Kodaira-shi, Tokyo (JP); Naito, Kazuo, Kawasaki-shi, Kanagawa-ken (JP)
(74) Representative: Casalonga, Axel

(56) References cited:
- EP-A- 0 575 260
- EP-A- 0 606 014
- GB-A- 2 259 185
- US-A- 5 198 724
- US-A- 5 549 780
- DATABASE INSPEC INSTITUTE OF ELECTRICAL ENGINEERS, STEVENAGE, GB Inspec No. 5053971, HYUN-KWON HA ET AL: "Plasma chemical vapor deposition of SiO/sub 2/ on air-exposed surfaces by cold plasma torch" XP002049374 & JOURNAL OF THE ELECTROCHEMICAL SOCIETY, AUG. 1995, USA, vol. 142, no. 8, ISSN 0013-4651, pages 2726-2730,

## Description

### BACKGROUND OF THE INVENTION

### Field of the Invention

The present invention relates to a process for surface treatment of vulcanized rubber and a process for production of rubber-based composite material.

### Prior Art

Surface treatment or surface modification is commonly used in various fields to make a substrate hydrophilic, water-repellent, or adherent (see e.g. EP-A-0 606 014 or GB-A-2 259 185). For example, surface treatment is performed on vulcanized rubber to be coated with a paint or to be bonded to any other material such as rubber, metal, and plastics for the production of composite materials. There are several kinds of surface treatments.

A known process for surface treatment of vulcanized rubber to be made adherent consists of intensively oxidizing the surface of vulcanized rubber with a strong acid or a strong oxidizing agent, thereby making minute cracks over the entire surface. This process suffers the disadvantage that a strong acid or strong oxidizing agent needs a great care for its handling and remarkably damages the surface of vulcanized rubber. Moreover, it does not make vulcanized rubber adherent sufficiently.

There are other known processes for surface treatment, which consist of exposing vulcanized rubber to chlorine gas, dipping vulcanized rubber in chlorine gas-bubbling water, or treating vulcanized rubber with a halogen compound. (See Japanese Patent Publication No. 36910/1977.) These processes are based on the principle that chlorine attacks double bonds in rubber to form chlorine-containing groups required for adhesion. The disadvantage is that the treated surface is resinified when treated rubber (NR or SBR) is combined with other material (such as metal and resin) to give rubber vibration isolators. The resinified surface poses a problem with poor adhesion and poor heat resistance. Another disadvantage is the yellowing of the treated surface. For example, yellowing occurs when the above-mentioned surface treatment is applied to the golf ball cover of vulcanized rubber whose main component is balata (trans-polyisoprene). This yellowing adversely affects the appearance of the coated golf ball. In addition, treatment with chlorine gas or halogen compound involves the possibility of causing an environmental problem.

There is another process for surface treatment of vulcanized rubber which is designed to activate the surface by etching with low-pressure glow plasma in oxygen or a mixture of oxygen and CF₄. This process is capable of uniform surface treatment. However, it needs a large vacuum equipment (for 10 Torr or below) when it is put to industrial use and it also needs a great installation cost and running cost for continuous operation. In addition, treatment with plasma may not produce the desired effect because oil and water are released from the surface of vulcanized rubber in the atmosphere of reduced pressure. Moreover, plasma is liable to generate heat during treatment, and hence it cannot be readily applied to a substrate having a low melting point.

The same problem as mentioned above is also involved in the industrially established corona treatment.

In order to address the above-mentioned problems, the present applicant proposed in Japanese Patent Laid-open No. 202208/1993 corresponding to USP 5,316,739 a process for treating the surface of vulcanized rubber with plasma of a gas of halogen-containing molecules or oxygen-containing molecules under atmospheric pressure. Requiring no solvents, this process is capable of surface treatment in a simple manner without environmental pollution. In addition, treatment by this process makes the surface more adherent than low-pressure glow plasma treatment by the conventional process. Another advantage of this process is that treatment only affects the thin surface layer, leaving the bulk of vulcanized rubber intact.

However, the plasma treatment under atmospheric pressure suffers the disadvantage of requiring a large amount of helium to dilute the treating gas for stable discharging. In addition, the plasma treatment needs a special power unit and precludes using the general-purpose power unit for corona treatment or low-pressure plasma treatment because its impedance at the time of discharge is lower than that of corona treatment and higher than that of low-pressure plasma treatment. These disadvantages lead to a high treatment cost.

From Journal of the Electrochemical Society, Aug. 1995, USA, Vol. 142, no. 8, pages 2726 - 2730, Hyun - Kwon Ha et al.: "Plasma chemical vapor deposition of SiO/sub2/ on air-exposed surfaces by cold plasma torch" the application of a homogeneous nonequilibrium low temperature plasma is known for the SiO-film deposition on various substrates.

### SUMMARY OF THE INVENTION

The present invention was completed in view of the foregoing. It is an object of the present invention to provide a process for efficient, satisfactory surface treatment of vulcanized rubber and a process for production of rubber-based composite material.

In order to achieve the above-mentioned object, the present inventors carried out a series of researches to find a process capable of satisfactory surface treatment or modification by a simple apparatus under atmospheric pressure.

The first aspect of the present invention resides in a process for surface treatment of vulcanized rubber according to claim 1. In this case, it is preferable that the nonequilibrium low-temperature plasma is generated under atmospheric pressure by using an AC power supply while passing a rare gas between the cathode and the dielectric with or without a reactive gas selected from the group consisting of N₂, O₂, H₂O, CO₂, CO, H₂, NH₃, air, CF₄, SF₆, NF₃, Freon gas, silane, CH₄, C₂H₆, ketones, phenols, alcohols, ethers, and chlorinated hydrocarbons.

The second aspect of the present invention resides in a process for production of rubber-based composite material, said process comprising bonding a material to the surface of vulcanized rubber, which has been treated by the process mentioned above, directly or indirectly with an adhesive interposed between them.

The process of the present invention is capable of surface treatment under atmospheric pressure and hence dispenses with a large-scale apparatus and complex auxiliary equipment. In addition, the process permits continuous treatment and makes it possible to active the surface of vulcanized rubber so that the treated surface is hydrophilic and adherent with an affinity for adhesive and others.

### BRIEF DESCRIPTION OF THE DRAWINGS

Fig. 1 is a schematic sectional view showing an example of the apparatus used to practice the present invention.

Fig. 2 is a schematic perspective view showing another example of the apparatus used to practice the present invention.

### DETAILED DESCRIPTION OF THE INVENTION

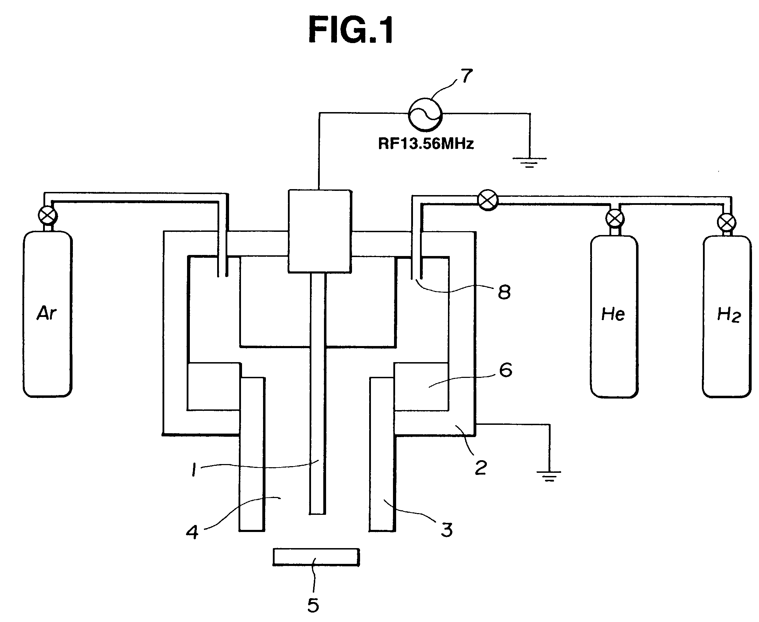

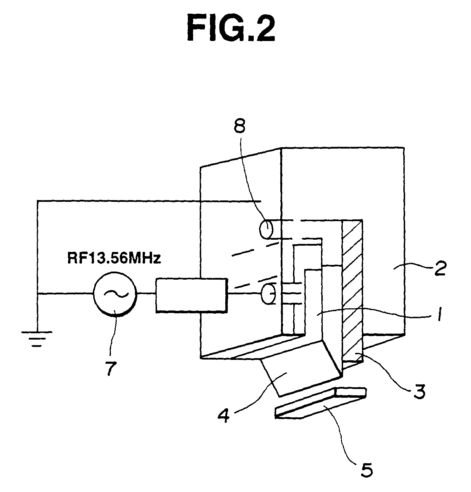

The present invention will be described in more detail with reference to Figs. 1 and 2. The process of the present invention comprises generating nonequilibrium low-temperature plasma 4 under atmospheric pressure between a cathode 1 and a dielectric 3 which is interposed between the cathode 1 and an anode 2, thereby performing surface treatment on the vulcanized rubber 5 placed in the vicinity of the nonequilibrium low-temperature plasma 4. In the figures, there are shown a spacer 6, a high-frequency power unit 7, and a gas inlet 8.

The cathode is made of conductive material, such as corrosion-resistant metal, which includes Al, Ti, Cr, Ni, Cu, W, Pt, Pd, and alloys thereof (particularly stainless steel, Cu-Zn, Cu-Al, Co-Cu, etc.). Of these metals, Pt, Pd, W, and stainless steel are desirable, and Pt is particularly desirable.

The anode is made of any of Cu, Al, stainless steel, steel, and brass. However, any other conductive materials may be used.

The dielectric functions to generate and sustain the nonequilibrium low-temperature plasma in a stable manner under atmospheric pressure. It may be formed from any of quartz, Al₂O₃, YSZ, SrTiO₃, PbTiO₃-PbZnO, and pyrex glass. Al₂O₃, quartz, and pyrex glass are commonly used.

An AC power supply is used to generate the nonequilibrium low-temperature plasma according to the present invention. The frequency of the power supply may range from 1 to 10¹⁰ Hz, more preferably 50 to 3×10⁹ Hz. A commonly used frequency is 13.56 MHz.

Stable discharge can be readily produced by using a rare gas such as helium and argon. Argon effectively functions as the main gas to be passed through the apparatus, with the AC power supply or radio-frequency oscillator energized. Air, nitrogen, and oxygen may also be used as the main gas so long as they permit the stable discharge.

The main gas such as helium and argon may be incorporated with a reactive gas mentioned later. The amount of the reactive gas for 100 parts by volume of the main gas (especially, argon) should be less than 1000 parts by volume, preferably less than 100 parts by volume, and more preferably less than 10 parts by volume. The incorporation with the reactive gas is intended to introduce functional groups into the surface of vulcanized rubber. From this point of view, it is preferable to incorporate the reactive gas in an amount of 10 parts by volume, especially 5 parts by volume per 100 parts by volume of the main gas.

The reactive gas for surface activation includes, for example, N₂, O₂, H₂O, CO₂, CO, H₂, NH₃, air, CF₄, SF₆, NF₃, Freon gas, silane, CH₄, C₂H₆, ketones, phenols, alcohols, ethers, and chlorinated hydrocarbon (such as CCl₄, CHCl₃, and CH₂Cl₂), which are used for ordinary process plasma. Of these examples, N₂, O₂, and air are preferable from the economical and environmental point of view, and O₂ is particularly desirable.

The flow rate of gas depends on the size of apparatus and the treatment required. It is usually 50-1000 sccm, preferably 100-600 sccm; however, it may vary according as the apparatus becomes larger or smaller.

According to the present invention, the nonequilibrium low-temperature plasma is formed under atmospheric pressure (about 760 Torr) and the treatment is carried out under atmospheric pressure. During treatment, the substrate may be cooled if there is the possibility that the substrate is thermally damaged due to an extended treating time or an excessively large input power.

The plasma generating apparatus used in the present invention is shown in Figs. 1 and 2. The one shown in Fig. 2 is capable of generating sheetlike plasma. A typical example of such apparatus is described in Japanese Patent Laid-open No. 212253/1992 corresponding to USP 5,198,724, Japanese Patent Laid-open No. 242924/1992 corresponding to USP 5,221,427 and USP 5,369,336, and Appl. Phys. Lett., 60 (7), 17, Feb., 1992.

During treatment, the vulcanized rubber is placed in the vicinity of the nonequilibrium low-temperature plasma. It is possible to carry out treatment in a stripy pattern by scanning the vulcanized rubber or the plasma generating apparatus. It is also possible to mechanically feed the cathode according as it consumes.

There are no specific restrictions on the kind of vulcanized rubber for surface treatment. Examples of the vulcanized rubber include natural rubber (NR), styrenebutadiene rubber (SBR), acrylonitrile-butadiene rubber (NBR), chloroprene rubber (CR), isoprene rubber (IR), isobutylene-isoprene rubber (IIR), ethylene-propylene-diene rubber (EPDM), and butadiene rubber (BR).

Upon surface treatment with the nonequilibrium low-temperature plasma, the vulcanized rubber has a highly activated surface to which any other material can be bonded directly or indirectly by the aid of adhesive. The material to be bonded includes rubber similar or dissimilar to the vulcanized rubber, plastics, metal, ceramics, and semiconductor. The bonding of rubber may be accomplished by placing unvulcanized rubber on the treated surface of the vulcanized rubber and heating it under pressure. The bonding of plastics (such as nylon), metal, and semiconductor may be accomplished by the aid of adhesive. It is possible to bond plastics directly (without adhesive) by injecting plastics onto the treated surface as mentioned later. The adhesive may be of natural type or synthetic type, depending on the intended application. A polyurethane-based adhesive is desirable.

The present invention will be applied to the surface treatment of balata-covered golf balls to be coated with a urethane-based paint, epoxy resin-based paint, or polyamide-based paint. The surface treatment provides good adhesion between the ball surface and the coating film.

The present invention may also be applied to the production of rubber vibration isolators. In this case, the surface treatment of vulcanized rubber is followed by:
(1) injection of plastics (such as nylon) onto the treated surface for direct adhesion:
(2) application of an adhesive (such as phenolic adhesive) to the treated surface and subsequent injection of plastics (for stronger bonding than (1)); or
(3) application of an adhesive to the treated surface and bonding of metal.

In addition, the present invention may be applied to the production of rubber-based composite materials such as retreaded tires. In this case, the surface treatment of vulcanized rubber is followed by the-bonding of unvulcanized tread rubber under pressure with heating.

### EXAMPLE

The invention will be described in more detail with reference to the following Examples and Comparative Example which are not intended to restrict the scope of the invention.

### Examples 1 to 9 and Comparative Example

A sheet was formed from a rubber compound of the following composition. Upon vulcanization at 150°C for 30 minutes, there was obtained a rubber sheet measuring 15 mm wide, 80 mm long, and 2.0 mm thick.

| Composition of rubber compound | |
|---|---|
| NR | 80 parts by weight |
| SBR | 20 |
| Sulfur | 5 |
| Zinc oxide | 10 |
| Stearic acid | 1 |
| Carbon black | 30 |
| Calcium carbonate | 100 |
| Accelerator (sulfenamide) | 0.2 |
| Accelerator (thiazole) | 2.0 |

The resulting sheet underwent surface treatment under the conditions shown in Table 1. Two pieces of the surface-treated sheet were bonded together, with the treated surfaces facing each other, after coating the treated surface with a polyurethane-based adhesive. The adhesive was cured at room temperature for 72 hours. The resulting sample was tested for bond strength by the T-peel test. The results are shown in Table 1.

**Table 1**

| Example | Material of cathode | Pressure (Torr) | RF power (W) | Flow rate of argon (SCCM) | Reactive gas | Flow rate of reactive gas (SCCM) | Bond strength (N/m) |
|---|---|---|---|---|---|---|---|
| 1 | Pt | 760 | 70 | 300 | - | - | 980 |
| 2 | Pt | 760 | 70 | 300 | O₂ | 1.5 | 1925 |
| 3 | Pt | 760 | 70 | 300 | O₂ | 3.0 | 2170 |
| 4 | Pt | 760 | 70 | 300 | O₂ | 4.5 | 2322 |
| 5 | Pt | 760 | 70 | 200 | He, O₂ | 100, 4.5 | 2368 |
| 6 | Pt | 760 | 70 | 300 | H₂ | 2.0 | 915 |
| 7 | Pt | 760 | 70 | 300 | N₂ | 3.0 | 897 |
| 8 | Pt | 760 | 70 | 300 | CF₄ | 3.0 | 1343 |
| 9 | Pt | 760 | 70 | 300 | H₂O | 1.6 | 944 |
| Comparative Example | Not treated | | | | | | 280 |

It is noted from Table 1 that the samples in Examples are by far superior in bond strength to the untreated sample in Comparative Example.

## Claims

1. A process for surface treatment of vulcanized rubber (5), said process comprising generating a region of nonequilibrium low-temperature plasma under atmospheric pressure between a cathode (1) and a dielectric (3) which is interposed between the cathode (1) and an anode (2), and placing the vulcanized rubber (5) in the vicinity of the nonequilibrium low-temperature plasma-generating region, thereby performing surface treatment on the vulcanized rubber (5).

2. The process of claim 1, wherein the nonequilibrium low-temperature plasma is generated under atmospheric pressure by using an AC power supply while passing a rare gas between the cathode and the dielectric with or without a reactive gas selected from the group consisting of N₂, O₂, H₂O, CO₂, H₂, NH₃, air, CF₄, SF₆, NF₃, Freon gas, silane, CH₄, C₂H₆, ketones, phenols, alcohols, ethers, and chlorinated hydrocarbons.

3. A process for production of rubber-based composite material, said process comprising bonding a material to the surface of vulcanized rubber which has been treated by the process defined in claim 1 or 2, directly or indirectly with an adhesive interposed between them.

## Patentansprüche

1. Verfahren zur Oberflächenbehandlung von vulkanisiertem Gummi (5), wobei dieses Verfahren die Erzeugung eines Bereiches von nicht im Gleichgewicht befindlichem Niedertemperaturplasma unter atmosphärischem Druck zwischen einer Kathode (1) und einem Dielektrikum (3), welches zwischen der Kathode (1) und einer Anode (2) angeordnet ist, und das Anordnen des vulkanisierten Gummis (5) in der Nachbarschaft des Bereiches der Erzeugung von nicht im Gleichgewicht befindlichem Niedertemperaturplasma umfaßt, wodurch die Oberflächenbehandlung des vulkanisierten Gummis (5) erreicht wird.

2. Verfahren nach Anspruch 1, bei welchem das nicht im Gleichgewicht befindliche Niedertemperaturplasma unter atmosphärischem Druck durch Anwendung einer Wechselstromversorgung erzeugt wird, während ein Edelgas zwischen der Kathode und dem Dielektrikum mit oder ohne einem reaktiven Gas, ausgewählt aus der aus N₂, O₂, H₂O, CO₂, H₂, NH₃, Luft, CF₄, SF₆, NF₃, Freongas, Silan, CH₄, C₂H₆, Ketonen, Phenolen, Alkoholen, Ethern und chlorierten Kohlenwasserstoffen bestehenden Gruppe, durchgeleitet wird.

3. Verfahren zur Herstellung von auf Gummi basierendem Verbundmaterial, wobei dieses Verfahren das Verkleben eines Materials mit der Oberfläche von vulkanisiertem Gummi, welcher nach dem in den Ansprüchen 1 oder 2 beschriebenen Verfahren behandelt worden ist, direkt oder indirekt mit einem zwischen ihnen angeordneten Klebstoff umfaßt.

## Revendications

1. Procédé de traitement de surface de caoutchouc vulcanisé (5), ledit procédé comprenant le fait de créer une région de plasma hors d'équilibre à basse température à la pression atmosphérique entre une cathode (1) et un diélectrique (3) qui est interposé entre la cathode (1) et une anode (2), et de placer le caoutchouc vulcanisé (5) à proximité de la région de production de plasma hors d'équilibre à basse température, pour réaliser de ce fait le traitement de surface du caoutchouc vulcanisé (5).

2. Procédé selon la revendication 1, dans lequel le plasma hors d'équilibre à basse température est produit à la pression atmosphérique en utilisant une alimentation électrique à courant alternatif tout en faisant passer un gaz rare entre la cathode et le diélectrique avec ou sans gaz réactif choisi dans le groupe comprenant N₂, O₂, H₂O, CO₂, H₂, NH₃, l'air, CF₄, SF₆, NF₃, les gaz Fréon®, le silane, CH₄, C₂H₆, les cétones, les phénols, les alcools, les éthers, et les hydrocarbures chlorés.

3. Procédé de fabrication d'un matériau composite à base de caoutchouc, ledit procédé comprenant le fait de lier un matériau à la surface d'un caoutchouc vulcanisé qui a été traité par le procédé défini dans la revendication 1 ou 2, directement ou indirectement avec un adhésif interposé entre eux
